(19) **Europäisches Patentamt**

**European Patent Office**

**Office européen des brevets**

(11) **EP 1 061 454 A1**

(12) **EUROPÄISCHE PATENTANMELDUNG**

(43) Veröffentlichungstag:
**20.12.2000 Patentblatt 2000/51**

(51) Int Cl.⁷: **G06F 13/42**

(21) Anmeldenummer: **99810523.3**

(22) Anmeldetag: **14.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder:
• **Kirrmann, Hubert**
**5405 Baden (CH)**

• **zur Bonsen, Georg**
**5400 Baden (CH)**

(74) Vertreter: **ABB Patent Attorneys**
**c/o ABB Business Services Ltd,**
**Intellectual Property (SLE-I),**
**Haselstrasse 16/699**
**5401 Baden (CH)**

(54) **Verfahren zum Synchronisieren von Geräten an einem Rechnerbus**

(57) Um die lokalen Uhren von Geräten an einem Bus (7) mit einem Master (5), einer Referenz-Uhr (6) und mehreren Slaves (1 - 4) zu synchronisieren, sendet der Master (5) der Referenz-Uhr (6) ein Abfragetelegramm (10). Darauf antwortet die Referenz-Uhr (6) mit einem Uhrtelegramm (11) mit der Uhrzeit, worauf der Master (5) ein Folgetelegramm (12) aussendet. Die Slaves (1 - 4) messen einen ersten Zeitabstand t_mci zwischen dem Abfragetelegramm (10) und dem Uhrtelegramm (11) sowie einen zweiten Zeitabstand t_cmi zwischen dem Uhrtelegramm (11) und dem Folgetelegramm (12), um ihre Position bezüglich Master und Clock, die Laufzeit T_pci zwischen der Referenz-Uhr (6) und dem jeweiligen Slave (1 - 4) zu bestimmen und um die Uhrzeit entsprechend zu korrigieren.

Fig. 1

**Beschreibung**

Technisches Gebiet

Die Erfindung bezieht sich auf ein Verfahren zum Synchronisieren von Geräten an einem Bus gemäss Oberbegriff von Anspruch 1. Derartige Verfahren werden z.B. für die Messdatenerfassung in einem elektrischen Unterwerk benötigt, oder in einem verteilten Datenbanksystems, aber auch in einem Kommunikationsnetzwerk, wo die lokalen Uhren der Geräte miteinander synchron laufen müssen.

Stand der Technik

Zum Synchronisieren der Uhren der Geräte fragt in bekannten Systemen der Busmaster die Referenzuhr ab. Um die Laufzeit zwischen der Referenzuhr und dem Master zu korrigieren, muss ausserdem ausgemessen werden, wie lange die Signale zwischen den beiden Geräten laufen. Sodann kann der vom Master ausgelesene Zeitwert entsprechend korrigiert werden.
Nun kann der Master ein Gerät (Slave) nach dem anderen mit seiner eigenen Uhr synchronisieren. Hierzu sendet er dem jeweiligen Gerät die Uhrzeit, misst die Antwortzeit vom Gerät und sendet sodann einen Korrekturwert. Dies ist allerdings sehr aufwendig.

Darstellung der Erfindung

Es stellt sich deshalb die Aufgabe, ein Verfahren der eingangs genannten Art bereitzustellen, das in einfacher Weise erlaubt, die Busgeräte möglichst genau zu synchronisieren.
Diese Aufgabe wird vom Verfahren gemäss Anspruch 1 gelöst.
Die Erfindung stützt sich also auf die Erkenntnis, dass es möglich ist, die Slaves zu synchronisieren, ohne dass der Master mit jedem individuell in Verbindung tritt, wenn jeder Slave den Zeitabstand $t\_mci$ zwischen dem Abfragetelegramm (vom Master) und dem Uhrtelegramm (von der Uhr) sowie den Zeitabstand $t\_cmi$ zwischen dem Uhrtelegramm und einem nächsten Folgetelegramm (vom Master) misst. Aus $t\_mci$ und $t\_cmi$ kann die Laufzeit $T\_pci$ zwischen der Uhr und dem jeweiligen Slave bestimmt werden, so dass der Slave die von der Uhr ausgesendete Uhrzeit entsprechend korrigieren kann.
Vorzugsweise sollte die Uhr und der Master zwischen Empfang einer Meldung und dem Aussenden der nächsten Meldung eine möglichst feste, vorgegebene Zeit $T\_source$ bzw. $T\_master$ verstreichen lassen. Diese bestimmt die Genauigkeit, mit der die Slaves die Laufzeiten bestimmen können. Aus dem Vergleich dieser Zeit mit $t\_cmi$ und $t\_mci$ kann jeder Slave ausserdem seine relative Position zum Master und zur Uhr bestimmen.
Das erfindungsgemässe Verfahren eignet sich insbesondere für lineare Busanordnungen. Es kann aber auch in anderen Anordnungen eingesetzt werden, z.B. bei sternförmigen Bussen, bei denen der Master und/oder die Uhr im Zentrum angeordnet sind.

Kurze Beschreibung der Zeichnung

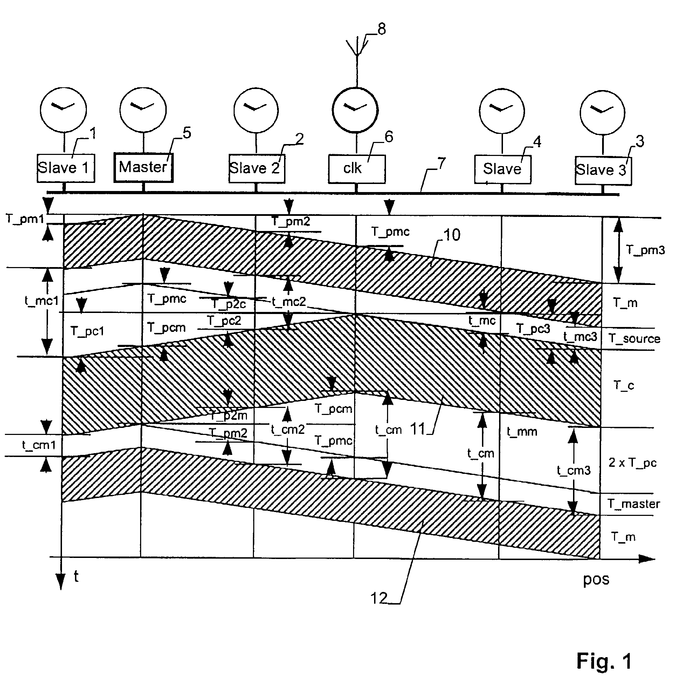

Weitere Vorteile und Anwendungen der Erfindung ergeben sich aus den abhängigen Ansprüchen und aus der nun folgenden Beschreibung anhand der Figur 1, welche einen linearen Bus mit den angeschlossenen Geräten sowie den zeitlichen Ablauf der verschiedenen Telegramme zur Synchronisation der Geräte darstellt.

Weg zur Ausführung der Erfindung

Im oberen Teil von Fig. 1 ist ein linearer Bus 7 dargestellt, an welchem mehrere Geräte 1 - 6 angeschlossen sind. Eines dieser Geräte ist ein Master 5, der den Verkehr auf dem Bus regelt. Die übrigen Geräte arbeiten als "Slaves" und dürfen nicht spontan senden, sondern nur auf Anforderung des Masters 5, welcher in regelmässigen Abständen die Geräte zur Übertragung ihrer Daten auffordert (Polling). Verschiedene Geräte können die Masterfunktion ausüben, im Normalfall der Reihe nach, für die Dauer einer Amtszeit (z.B. 4 s) oder nach Ausfall des jeweiligen Masters.
Anordnungen dieser Art bestehen in vielen Feldbussen, darunter MVB (Train Communication Network, IEC 61375), FIP (EN 50170 Part 2) und IEC Fieldbus (IEC CDV 61158-4).
In der Ausführung nach Fig. 1 wird angenommen, dass eines der Geräte als Uhr 6 arbeitet und die absolute Referenzzeit zur Verfügung stellt. Die Uhr 6 kann z.B. über Funk 8 von einer genauen Referenzzeitquelle gesteuert werden.
Im folgenden wird beschrieben, wie die am Bus 7 angeschlossenen Geräte auf die von der Uhr 6 gelieferte Zeit synchronisiert werden. Diese Synchronisation beruht auf einer Messung von Zeiten zwischen einzelnen Telegrammen und einer Berechnung der entsprechenden Signallaufzeiten. Dabei bezeichnen T_pxy Signallaufzeiten zwischen den Geräten x und y, wobei x und y einen der Werte m (Master), c (Uhr), i (beliebiger Slave) oder 1 - 4 (Slave 1 - 4) annehmen können. t_mci bezeichnet die gemessene Zeit zwischen dem Ende des Abfragetelegramms und dem Start des Uhrtelegramms am Ort des Slaves i und t_cmi die gemessene Zeit zwischen dem Ende des Uhrtelegramms und dem Start des Folgetelegramms am Ort des Slaves i. Im folgenden nehmen wir in guter Näherung an, dass T_pxy = T_pyx.

Die Ort-Zeit-Diagramme der verschiedenen Telegramme, welche bei einer Synchronisation des Busses erzeugt werden, sind im unteren Teil von Fig. 1 dargestellt.

Um die Geräte am Bus zu synchronisieren fordert der Master 5 zuerst mit einem Abfragetelegramm 10 die Uhr 6 auf, die Zeit mitzuteilen. Das Abfragetelegramm 10 benötigt bis zur Uhr 6 eine Laufzeit T_pmc.

Die Uhr 6 antwortet nach einer festen Zeit T_source mit einem Uhrtelegramm 11, welches die Zeit wiedergibt, die zum Zeitpunkt seiner Aussendung herrschte. Das Uhrtelegramm ist bis zum Master 5 einer Laufzeit T_pcm unterworfen.

Das Uhrtelegramm 11 wird vom Master 5 und allen übrigen Geräten empfangen.

Damit der Master 5 seine eigene Uhr genau setzen kann, muss er den Wert von T_pmc bzw. T_pcm kennen, um die im Uhrtelegramm übermittelte Zeit zu korrigieren. Hierzu misst er die Zeit t_mcm (= t_mc1) zwischen dem Ende des Abfragetelegramms 10 und dem Anfang des Uhrtelegramms 11 und berechnet

$$T\_pmc = (t\_mcm - T\_source)/2.$$

Nach Empfang des Uhrtelegramms sendet der Master nach einer festen Zeit T_master ein beliebiges weiteres Telegramm, welches hier als "Folgetelegramm" 12 bezeichnet wird. Dieses Folgetelegramm kann, wie im folgenden beschrieben, von den übrigen Geräten verwendet werden, um ihre eigenen Uhren zu stellen.

Hierzu misst jeder am Bus 7 angeschlossene Slave i zwei Zeiten, nämlich die Zeit t_mci zwischen dem Ende des Abfragetelegramms 10 und dem Start des Uhrtelegramms 11 und die Zeit t_cmi zwischen dem Ende des Uhrtelegramms 11 und dem Start des Folgetelegramms 12. Aufgrund dieser Zeiten kann der Slave i seine relative Position zum Master 5 und zur Uhr 6 bestimmen:

- Ist t_mci > T_source und t_cmi ≤ T_master, so befindet sich der Master 5 zwischen dem Slave i und der Uhr 6. Dies ist in Fig. 1 der Fall für Slave 1 bzw. t_mc1 und t_cm1.
- Ist t_mci > T_source und t_cmi > T_master, so befindet sich der Slave i zwischen dem Master 5 und der Uhr 6. Dies ist in Fig. 1 der Fall für Slave 2 bzw. t_mc2 und t_cm2.
- Ist t_mci ≤ T_source und t_cmi > T_master, so befindet sich die Uhr 6 zwischen dem Slave i und dem Master 5. Dies ist in Fig. 1 der Fall für Slave 3 bzw. t_mc3 und t_cm3.

Bei obigen Vergleichen ist zu beachten, dass die mathematisch strengen Vergleichsoperationen ">" und "≤" in der Praxis über Schwellwerte abgeschwächt werden. Dadurch ändert sich jedoch die Funktion der relativen Ortsbestimmung nicht. Insbesondere werden T_master und T_source als Maxima betrachtet, die jedes Gerät im schlimmsten Fall einzuhalten hat, aber etwas unterschreiten darf.

Im folgenden wird nun diskutiert, wie die in den drei unterschiedlichen Positionen angeordneten Slaves 1, 2 und 3 ihre Uhren synchronisieren.

Dabei ermittelt jeder Slave i die Laufzeit T_pci zwischen der Uhr 6 und ihm selbst. Wenn er diese Laufzeit kennt, so kann er die im Uhrtelegramm 11 mitgeteilte Uhrzeit entsprechend korrigieren und seine Uhr setzen.

Slave 1:

Ein Slave i, für welchen der Master 5 zwischen ihm und der Uhr 6 angeordnet ist (in Fig. 1 für i=1), berechnet die Laufzeit T_pci gemäss

$$T\_pci = (t\_mci - T\_source)/2 + T\_pmi,$$

wobei T_pmi die Laufzeit zwischen dem Master 5 und dem Slave i ist. T_pmi kann der Slave i im normalen Betrieb ermitteln: Wenn der Master 5 Slave i nach einer beliebigen Information (Prozessdaten, Gerätestatus, etc.) fragt und Slave i eine entsprechende Antwort gibt, so misst Slave i die Zeit t_smi, die vom Ende seiner Antwort bis zum nächsten (beliebigen) Telegramm des Masters verstreicht. Wird angenommen, dass der Master dieses nächste Telegramm nach der Zeit T_master nach Ende der von ihm empfangenen Antwort abschickt, so gilt

$$T\_pmi = (t\_smi - T\_master)/2.$$

Slave 2:

Ein Slave i, der zwischen dem Master 5 und der Uhr 6 angeordnet ist (in Fig. 1 für i=2), berechnet die Laufzeit T_pci aus

$$T\_pci = (t\_mci - T\_source)/2.$$

Falls nötig, kann der Slave i die Laufzeit T_pmi zwischen ihm und dem Master 5 berechnen aus

$$T\_pmi = (t\_cmi - T\_master)/2.$$

Slave 3:

Ein Slave i, für den die Uhr 6 zwischen ihm und dem Master 5 angeordnet ist (in Fig. 1 für i=3), berechnet die Laufzeit T_pci aus

$$T\_pci = T\_pmi - (t\_cmi - T\_master)/2,$$

wobei T_pmi wiederum die Laufzeit zwischen dem Master 5 und dem Slave i ist. Diese Laufzeit kann der Slave 3 in der oben zu Slave 1 beschriebenen Weise im Normalbetrieb des Busses ermitteln.

Die in dem hier beschriebenen Verfahren erreichbare Genauigkeit hängt von den Schwankungen der festen Werte T_xxx ab. Wenn angenommen wird, dass keiner davon mehr als 1 µs variiert, so beträgt der Fehler bei der Uhr oder beim Slave 2 höchsten 2 µs (da der Wert halbiert wird). Bei den anderen Geräten sind es 4 µs, da zwei Abfragen nötig sind. Allerdings kann ein Gerät den Mittelwert aus einer Vielzahl von Gerätestatus-Abfragen ermitteln. Somit lässt sich eine Genauigkeit von besser als 5 µs erreichen. Generell können alle gemessenen Zeitdauern bzw. Zeitabstände gemittelt werden, um eine bessere Genauigkeit zu erreichen, wobei die gemessenen Werte jeweils nicht berücksichtigt werden, wenn sie sich ausserhalb eines konfigurierbaren Plausibilitätsbereichs befinden.

Es kann vorkommen, dass der Master 5 kein Telegramm nach der Antwort des Slaves schicken kann oder erst nach einem Verzug, welcher grösser als T_master ist. Grund dafür könnte sein, dass die Periode kurz danach abgeschlossen ist oder ein Telegrammverlust stattgefunden hat. In diesem Fall kann ein Gerät die Plausibilität der gemessenen Zeit ermitteln, indem Werte verworfen werden, die sich jenseits einer als vernünftig betrachteten Schwelle befinden.

Das obige Verfahren kann auch für nichtlineare Bustopographien verwendet werden, z.B. für eine sternförmige Topographie, falls sich der Master 5 und/oder die Uhr 6 im Zentrum des Sterns befinden, so dass die Topographie für einen einzelnen Slave, den Master und die Uhr jeweils linear ist.

Bezugsziffern

| | |
|---|---|
| 1 - 4: | Slave 1 - 4 |
| 5: | Master |
| 6: | Uhr |
| 7: | Bus |
| 8: | Funknetz |
| 10: | Abfragetelegramm |
| 11: | Uhrtelegramm |
| 12: | Folgetelegramm |
| t_cm1 - t_cm3, t_cmi: | gemessene Zeiten zwischen Zeit- und Folgetelegramm |
| T_master: | Antwortzeit des Masters |
| t_mc1 - t_mc3, t_mci: | gemessene Zeiten zwischen Abfrage- und Zeittelegramm |
| T_pm1 - Tpm3, T_pmi: | Laufzeiten zwischen Master und Slaves |

| | |
|---|---|
| T_pmc: | Laufzeit zwischen Master und Uhr |
| t_smi: | gemessene Zeit zwischen Antwort an den Master und nächstem Mastertelegramm |
| T_source: | Antwortzeit der Uhr |

**Patentansprüche**

1. Verfahren zum Synchronisieren von Geräten an einem Bus (7), wobei am Bus (7) ein Master (5), eine Uhr (6) und mehrere Slaves (1 - 4) angeschlossen sind, dadurch gekennzeichnet, dass der Master (5) der Uhr (6) ein Abfragetelegramm (10) schickt, worauf die Uhr (6) ein Uhrtelegramm (11) mit der Uhrzeit aussendet, worauf der Master (5) ein Folgetelegramm (12) aussendet, wobei jeder Slave (i, 1 - 4) einen ersten Zeitabstand t_mci zwischen dem Abfragetelegramm (10) und dem Uhrtelegramm (11) sowie einen zweiten Zeitabstand t_cmi zwischen dem Uhrtelegramm (11) und dem Folgetelegramm (12) messen, um die Laufzeit T_pci zwischen der Uhr (6) und dem jeweiligen Slave (1 - 4) zu bestimmen und um die Uhrzeit entsprechend zu korrigieren.

2. Verfahren nach Anspruch 1, dadurch gekennzeichnet, dass die Uhr (6) das Uhrtelegramm (11) eine erste vorgegebene Zeit T_source nach dem Empfang des Abfragetelegramms (10) aussendet, und dass der Master (6) das Folgetelegramm (12) eine zweite vorgegebene Zeit T_master nach Empfang des Uhrtelegramms (11) aussendet.

3. Verfahren nach Anspruch 2, dadurch gekennzeichnet, dass die Slaves (1 - 4) zur Bestimmung ihrer relativen Position zum Master (5) und zur Uhr (6) t_mci mit T_source und t_cmi mit T_master vergleichen.

4. Verfahren nach Anspruch 3, dadurch gekennzeichnet, dass

   ein Slave (1), für welchen $t\_mci > T\_source$ und $t\_cmi \leq T\_master$, folgert, dass sich der Master (5) zwischen ihm und der Uhr (6) befindet, dass
   ein Slave (2), für welchen $t\_mci > T\_source$ und $t\_cmi > T\_master$, folgert, dass er sich zwischen dem Master (5) und der Uhr (6) befindet, und dass
   ein Slave (3, 4), für welchen $t\_mci \leq T\_source$ und $t\_cmi > T\_master$, folgert, dass sich die Uhr (6) zwischen ihm und dem Master (5) befindet.

5. Verfahren nach einem der vorangehenden Ansprüche, dadurch gekennzeichnet, dass ein Slave (1), für den der Master (5) zwischen ihm und der Uhr (6) angeordnet ist, die Laufzeit T_pci von der Uhr (6) zu ihm im wesentlichen bestimmt aus

$$T\_pci = (t\_mci - T\_source)/2 + T\_pmi,$$

   wobei T_pmi die Laufzeit zwischen dem Master (5) und dem Slave ist, und dass ein Slave (2), der sich zwischen dem Master (5) und der Uhr (6) befindet, die Laufzeit T_pci von der Uhr (6) zu ihm im wesentlichen bestimmt aus

$$T\_pci = (t\_mci - T\_source)/2,$$

   und dass ein Slave (3, 4), für den sich die Uhr (6) zwischen ihm und dem Master (5) befindet, die Laufzeit T_pci von der Uhr (6) zu ihm im wesentlichen bestimmt aus

$$T\_pci = T\_pmi - (t\_cmi - T\_master)/2.$$

6. Verfahren nach Anspruch 5, dadurch gekennzeichnet, dass ein Slave (1, 3, 4) die Laufzeit T_pmi zwischen dem Master (5) und ihm bestimmt, indem er im Normalbetrieb misst, wie schnell der Master, nachdem ihm der jeweilige Slave eine Meldung zugestellt hat, eine nächste Meldung erzeugt, insbesondere aus

$$T\_pmi = (T\_smi - t\_master)/2$$

7. Verfahren nach einem der vorangehenden Ansprüche, dadurch gekennzeichnet, dass der Bus linear ist und der Master (5), die Uhr (6) und die Slaves (1 - 4) in einer Reihe angeordnet sind.

8. Verfahren nach einem der Ansprüche 1 - 6, dadurch gekennzeichnet, dass der Bus sternförmig mit einem Zentrum ist und der Master (5) und/oder die Uhr (6) im Zentrum angeschlossen sind.

9. Verfahren nach einem der vorangehenden Ansprüche, dadurch gekennzeichnet, dass die gemessenen Zeiten mindestens teilweise gemittelt werden um die Genauigkeit zu verbessern, wobei Zeiten, welche sich ausserhalb eine Plausibilitätsbereichs befinden, beim Mitteln nicht berücksichtigt werden.

Fig. 1

## EP 1 061 454 A1

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 237 106 A (PHILIPS NORDEN AB ;PHILIPS NV (NL)) 16. September 1987 (1987-09-16) | 1-3 | G06F13/42 |
| A | * Seite 1, Zeile 35 - Seite 2, Zeile 15 * <br> * Seite 2, Zeile 21 - Zeile 30 * <br> * Seite 3, Zeile 20 - Seite 5, Zeile 12 * <br> * Seite 6, Zeile 4 - Zeile 37 * <br> * Zusammenfassung; Ansprüche 1-3; Abbildungen 1-3 * <br> --- | 4-9 | |
| A | WO 98 50845 A (INTEL CORP) 12. November 1998 (1998-11-12) <br> * Seite 2, Absatz 3 * <br> * Seite 3, Absatz 2 - Seite 5 * <br> * Zusammenfassung; Abbildungen 1-3 * <br> --- | 1-5 | |
| A | US 5 142 683 A (GERBEHY JAY L ET AL) 25. August 1992 (1992-08-25) <br> * Spalte 2, Zeile 43 - Spalte 3, Zeile 19 * <br> * Spalte 3, Zeile 46 - Spalte 5, Zeile 29 * <br> * Zusammenfassung; Ansprüche 1-3; Abbildungen 1,2 * <br> ----- | 1-3 | **RECHERCHIERTE SACHGEBIETE (Int.Cl.7)** <br><br> G06F |

Der vorliegende Recherchenbericht wurde für alle Patentansprüche erstellt

| Recherchenort | Abschlußdatum der Recherche | Prüfer |
|---|---|---|
| DEN HAAG | 2. Dezember 1999 | Nguyen Xuan Hiep, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 99 81 0523

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-1999

| Im Recherchenbericht angeführtes Patentdokument | Datum der Veröffentlichung | Mitglied(er) der Patentfamilie | Datum der Veröffentlichung |
|---|---|---|---|
| EP 0237106 A | 16-09-1987 | SE 452231 B | 16-11-1987 |
| | | DE 3785780 A | 17-06-1993 |
| | | DE 3785780 T | 11-11-1993 |
| | | DK 111687 A | 08-09-1987 |
| | | JP 2529682 B | 28-08-1996 |
| | | JP 62271540 A | 25-11-1987 |
| | | SE 8601073 A | 08-09-1987 |
| | | US 4815110 A | 21-03-1989 |
| WO 9850845 A | 12-11-1998 | AU 6898098 A | 27-11-1998 |
| US 5142683 A | 25-08-1992 | US 4866664 A | 12-09-1989 |
| | | AT 78611 T | 15-08-1992 |
| | | DE 3873054 D | 27-08-1992 |
| | | EP 0321544 A | 28-06-1989 |
| | | JP 1501660 T | 08-06-1989 |
| | | WO 8810469 A | 29-12-1988 |

EPO FORM P0461

Für nähere Einzelheiten zu diesem Anhang : siehe Amtsblatt des Europäischen Patentamts, Nr.12/82